# EUROPEAN PATENT APPLICATION

(11) **EP 1 950 897 A1**
(43) Date of publication of application: **30.07.2008**
(21) Application number: 06822532.5
(22) Date of filing: 27.10.2006
(51) Int. Cl.: H04B 7/26, H04B 1/707, H04J 1/02, H04J 11/00, H04L 29/08

(54) **RECEPTION STATUS INFORMATION NOTIFYING METHOD AND RECEPTION STATUS INFORMATION NOTIFYING APPARATUS**

(30) Priority: 02.11.2005 JP 2005319755
(71) Applicant: Sharp Kabushiki Kaisha, Osaka-shi, Osaka 545-8522 (JP)
(72) Inventor: ONODERA, Takashi, Chiba284-0003 (JP); TSUBOI, Hidekazu, Chiba 262-0031 (JP); NOGAMI, Toshizo, Chiba-shi Chiba 266-0005 (JP)
(74) Representative: Brown, Kenneth Richard
(86) International application number: PCT/JP2006/321571
(87) International publication number: WO 2007/052571

(57) **Abstract**

An increase in overhead due to an increase in an amount of feedback information of a reception status is suppressed.

In a reception status information notifying apparatus A, a reception status estimating part 1 estimates a reception status from a received signal and outputs reception status information. A reception status information storing part 7 outputs previous reception status information stored therein to a second notified information generating part 11 and stores current reception status information from the first reception status estimating part 1. The second notified information generating part 11 calculates a difference between the current reception status information from the reception status estimating part 1 and the previous reception status information stored in the reception status information storing part 7 to generate second notified information. A first notified information storing part 15 outputs first notified information stored latest to a third notified information generating part 17 and stores the first notified information instructed, by a notified information selecting part 5, to be stored (instructed to be stored only when the notification of the first notified information is performed). The third notified information generating part 17 calculates a difference between the current reception status information from the reception status estimating part and the first notified information (stored latest in the first notified information storing part 15) to generate third notified information.

## Description

### TECHNICAL FIELD

The present invention relates to a reception status information notifying method and notifying apparatus in a communication system, by which a reception status is estimated from a received signal, and a communication partner is notified of the result of the estimation, and the notified side decides a modulation scheme and allocation of communication based on the notified information.

### BACKGROUND ART

In a communication system, as a method for improving communication efficiency (total throughput and transmission rate of the system), there are methods such as adaptive modulation that decides a modulation scheme according to a reception status, adaptive scheduling that decides allocation of communication according to a reception status, etc. (see Patent Document 1 and Patent Document 2). In such methods, there is need of notification (feedback) of reception status information to notify a transmitting side of a result obtained by estimating a reception status from a received signal, and the like.

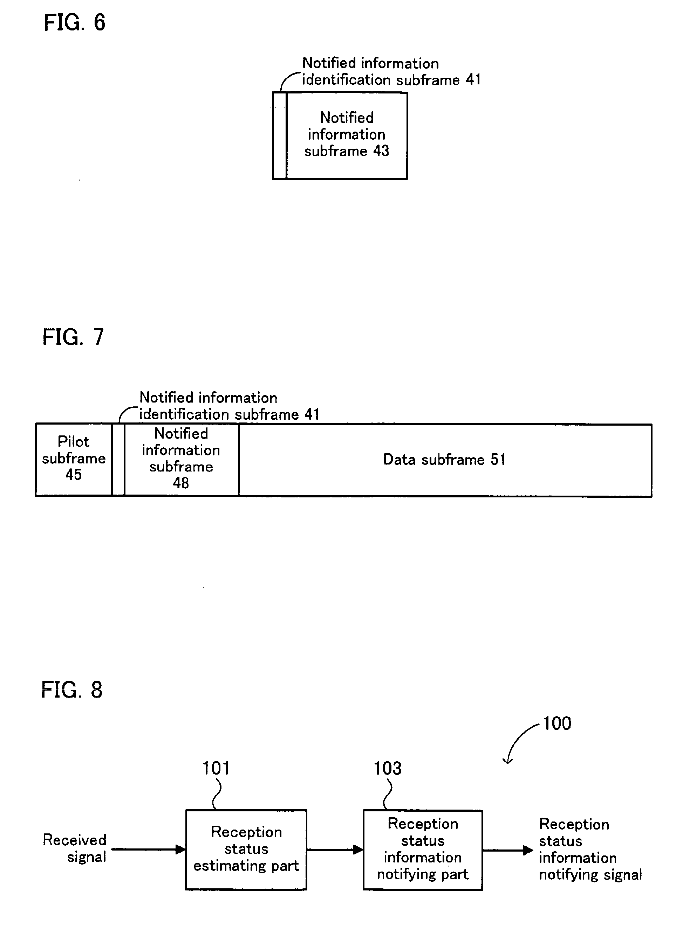

Fig. 8 is a functional block diagram showing one configuration example of a conventional reception status information notifying apparatus. In a reception status information notifying apparatus 100 shown in Fig. 8, a reception status estimating part 101 estimates a reception status from a received signal to output reception status information. A reception status information notifying part 103 generates a reception status information notifying signal for notifying a communication partner of the reception status information estimated by the reception status estimating part 101.

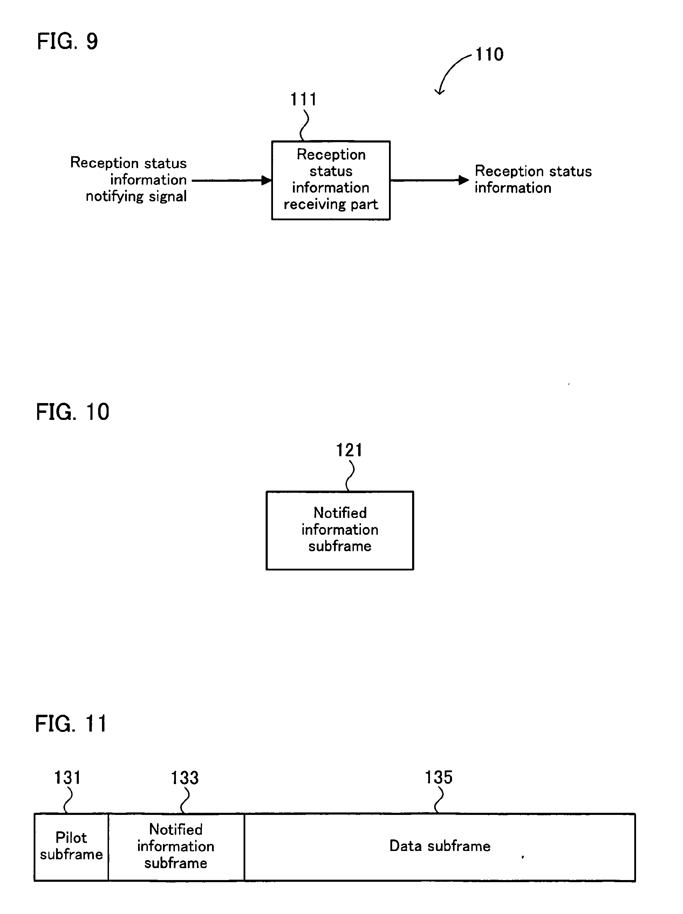

Fig. 9 is a view showing one configuration example of the conventional reception status information receiving apparatus. As shown in Fig. 9, in a reception status information receiving apparatus 110, a reception status information receiving part 111 receives a reception status information notifying signal from the communication partner to output reception status information.

Fig. 10 is a view showing one example of a frame configuration of communication for conventional reception status information notification. Incidentally, the frame represents a unit that is used when transmission and reception are performed while an element that forms the frame is called a subframe. The reception status information notified frame shown in Fig. 10 includes a notified information subframe 121 that transmits reception status information.

Fig. 11 is a view showing another configuration example of a frame configuration for conventional reception status information notification. The frame shown in Fig. 11 is the frame configuration example when subframes for reception status information notification are time-multiplexed on a frame for data communication. The frame shown in Fig. 11 includes a pilot subframe 131 that transmits a known signal for reception status estimation and the like, a notified information identification subframe 133 that transmits reception status information, and a data subframe 135 that transmits communication data.
Patent Document 1: Japanese Patent Application Publication No. Hei 10-41876
Patent Document 2: Japanese Patent Application Publication No. 2005-27107
Non-patent Document 1: Yamamura, et al.; "A Study on Adaptive Modulated High Mobility OFDM Radio Transmission System" Technical Report of The Institute of Electronics, Information and Communication Engineers, RCS99-146, November 1999
Non-patent Document 2: Kishiyama, et al.; "Experimental Evaluations of Adaptive Modulation and Channel Coding in Forward Link for VSF-OFCDM Broadband Wireless Access" Technical Report of The Institute of Electronics, Information and Communication Engineers, RCS2003-25, May 2003

### DISCLOSURE OF INVENTION

### Problems to be Solved by the Invention

As mentioned above, in the notification of conventional reception status information, the notification of the estimation result of the reception status is performed as it is. Particularly, in a multi-carrier communication system in which information is carried on a plurality of carriers (subcarriers), notification of reception status information is performed for every subcarrier when adaptive modulation, adaptive scheduling and the like are performed for every subcarrier.

However, when the notification of the reception status information is performed as it is, it is necessary to notify of information having the bit number of (the number of bits of reception status information) x (the number of subcarriers). For example, in the case of a system in which the bit number of the reception status information is 8 and the number of subcarriers is 768, 6144 bits is required for one notification of reception status information. There is a problem that providing notification of such large amounts of reception status information results in large overhead of data communication to cause a reduction in system throughput.

There is also a problem that a band of a limited control channel becomes tight in performing these notifications with the control channel for use in exchanging control information. Furthermore, there is a problem that time necessary for transmission and reception increases, leading to increased power consumption.

### Means for Solving Problems

According to one aspect of the present invention, in a communication system in which a receiving side notifies a transmitting side of reception status information representing information acquired from a reception status, there is provided a reception status information notifying method characterized in that the notification of reception status information is performed by combining first notified information representing current reception status information and second notified information representing a difference between the current reception status information and previous reception status information. Also, in a communication system in which a receiving side notifies a transmitting side of reception status information representing information acquired from a reception status, there is provided a reception status information notifying method characterized in that the notification of reception status information is performed by combining three types of notified information including first notified information representing current reception status information, second notified information representing a difference between the current reception status information and previous reception status information, and third notified information representing a difference between the current reception status information and latest notified first notified information.

According to the aforementioned method, it is possible to suppress an increase in an amount of information relevant to feedback of the reception status. Moreover, two or more types of information are appropriately combined to perform feedback, thereby making it possible to suppress the amount of feedback information as a whole.

For example, in any one of cases, that is, a case where the notification of first reception status information is performed, a case where an error occurs during reception of reception status information, a case where communication is restarted after communication is not performed for such a long time that no correlation is found, and a case where an amount of information of the first notified information is smaller than that of the second notified information, the notification of the first notified information is preferably performed, and in other cases, the notification of the second notified information is preferably performed.

In addition, the notification of the first notified information is performed when the notification of the first reception status information is preferably performed. , Moreover, when an error occurs during reception of reception status information or communication is restarted after communication is not performed for such a long time that no correlation is found, the first notified information or third notified information, that is, the notification of one having a smaller amount of information, is preferably performed. And in other cases, the notification of any one of the second notified information, second notified information, and third notified information, that is, one having the smallest amount of information is preferably performed.

In a communication system in which a receiving side notifies a transmitting side of reception status information representing information acquired from a reception status, there is provided a reception status information notifying apparatus including a reception status estimating part that estimates a reception status from a received signal to output reception status information representing first notified information, a reception status information storing part that stores current reception status information from the reception status estimating part, a second notified information generating part that calculates a difference between the current reception status information from the reception status estimating part and previous notified status information stored in the reception status information storing part to generate second notified information, a control part that, upon receiving notified control information for controlling a type of notified information, generates and outputs a notification instructing signal for instructing a notified information selecting part to send, by use of first notified information, reception status information using, a notified information selecting part that selects one type from two types of notified information including the current reception status information representing the first notified information from the reception status estimating part and the second notified information generated by the second notified information generating part to output based on the amount of each of the first and second notified information, as well as the notification instructing signal, and a reception status information notifying part that generates a reception status information notifying signal for notifying a communication partner of the notified information selected by the notified information selecting part. By using two types of information including the entire information and the difference between the previous information and the current information, it is possible to suppress an increase in an amount of information to be fed back.

Moreover, in a communication system in which a receiving side notifies a transmitting side of reception status information representing information acquired from a reception status, there is provided a reception status information notifying apparatus including a reception status estimating part that estimates a reception status from a received signal to output reception status information representing first notified information, a reception status information storing part that stores current reception status information from the reception status estimating part, a second notified information generating part that calculates a difference between the current reception status information from the reception status estimating part and previous notified status information stored in the reception status information storing part to generate second notified information, a first notified information storing part that outputs stored latest notified first notified information to third notified information generating part and stores first notified information instructed to be stored by a notified information selecting part that selects notified information, third notified information generating part that calculates a difference between the current reception status information from the reception status estimating part and the latest first notified information stored in the first notified information storing part to generate third notified information, a control part that, upon receiving notified control information for controlling a type of notified information, generates and outputs a notification instructing signal for instructing the notified information selecting part to send, by use of first notified information or third notified information, reception status information, a reception status information notifying part that generates a reception status information notifying signal for notifying a communication partner of the notified information selected by the notified information selecting part, characterized in that the notified information selecting part selects one type from three types of notified information including the current reception status information representing the first notified information from the reception status estimating part, the second notified information generated by the second notified information generating part ,and third notified information generated by the third notified information generating part, based on the amount of each of the first to third notified information, as well as the notification instructing signal, and instructs the first notified information storing part to output and store the first notified signal when the first notified information is selected.

By using three types of information including the entire information, the difference between the previous information and the current information and the different between the latest entire information and the current information, more precise notification of reception status can be achieved.

Further, in a communication system in which a receiving side notifies a transmitting side of reception status information representing information acquired from a reception status, there is provided a reception status information receiving apparatus including a reception status information receiving part that receives a reception status information notifying signal from a communication partner, outputs a reception error signal when a reception error occurs, and outputs the received notified information when reception is made without any error; a notified information expanding part that outputs reception status information; and a reception status information storing part that stores the current reception status information from the notified information expanding part, characterized in that when the notified information output from the reception status information receiving part is first notified information, the notified information expanding part outputs the notified information, serving as reception status information, output from the caption status information receiving part, and when the notified information is second notified information, the notified information expanding part adds the notified information output from the reception status information receiving part to the previous reception status information stored in the reception status information storing part to output the resultant information of the addition as reception status information.

Furthermore, in a communication system in which a receiving side notifies a transmitting side of reception status information representing information acquired from a reception status, there is provided a reception status information notifying apparatus including a reception status estimating part that estimates a reception status from a received signal to output reception status information representing first notified information, a reception status information storing part that stores the current reception status information from the reception status estimating part, a second notified information generating part that calculates a difference between the current reception status information from the reception status estimating part and previous notified status information stored in the reception status information storing part to generate second notified information, a control part that, upon receiving notified control information for controlling a type of notified information, generates and outputs a notification instructing signal for instructing a notified information selecting part to send, by use of first notified information, reception status information using, a notified information selecting part that selects one type of notified information from two types of notified information including the current status information representing the first notified information estimated by the reception status estimating part and the second notified information generated by the second notified information generating part to output based on the amount of each of the first and second notified information, as well as the notification instructing signal; and a reception status information notifying part that generates a reception status information notifying signal that notifies a communication partner of the notified information selected by the notified information selecting part. This makes it possible to perform processing corresponding to notification by the aforementioned notifying apparatus in the reception status information receiving apparatus.

It should be noted that the aforementioned technique have greater effect in the case of being applied to a multi-carrier communication apparatus.

### Advantageous Effect of the Invention

As described above, the present invention has the advantage that an increase in overhead due to an increase in an amount of feedback information of a reception status can be suppressed. Moreover, time necessary for transmitting and receiving feedback information can be shortened, and accordingly it is possible to obtain power consumption suppressing effects.

### BRIEF DESCRIPTION OF THE DRAWINGS

[Fig. 1] Fig. 1 is a functional block diagram showing one configuration example of a reception status information notifying apparatus according to a first embodiment of the present invention;
[Fig. 2A] Fig. 2A is a flowchart showing the operation flow of the reception status information notifying apparatus according to the first embodiment of the present invention;
[Fig. 2B] Fig. 2B is a flowchart, which is subsequent to that of Fig. 2A, to show the operation flow of the reception status information notifying apparatus according to the first embodiment of the present invention;
[Fig. 3] Fig. 3 is a view showing one example of reception status information notification according to the first embodiment of the present invention;
[Fig. 4] Fig. 4 is a view showing one configuration example of a reception status information receiving apparatus according to a second embodiment of the present invention;
[Fig. 5] Fig. 5 is a flowchart showing the operation flow of the reception status information receiving apparatus according to the second embodiment of the present invention;
[Fig. 6] Fig. 6 is a view showing one example of a frame configuration of communication for reception status information notification according to the second embodiment of the present invention;
[Fig. 7] Fig. 7 is a view showing another configuration example of a frame configuration for reception status information notification according to the second embodiment of the present invention;
[Fig. 8] Fig. 8 is a functional block diagram showing one configuration example of a conventional reception status information notifying apparatus;
[Fig. 9] Fig. 9 is a view showing one configuration example of a conventional reception status information receiving apparatus;
[Fig. 10] Fig. 10 is a view showing one example of a frame configuration of communication for conventional reception status information notification; and
[Fig. 11] Fig. 11 is a view showing another configuration example of a frame configuration for conventional reception status information notification.

### EXPLANATION OF REFERENCE NUMERALS

A ... reception status information notifying apparatus, 1 ... reception status estimating part, 3 ... control part, 5 ... notified information selecting part, 7 ... reception status information storing part, 11 ... second notified information generating part, 15 ... first notified information storing part, 17 ... third notified information generating part, 21 ... reception status information notifying part

### BEST MODE FOR CARRYING OUT THE INVENTION

In the present specification, first notified information is one that feeds back the entire information bits when differential information is used in notifying a reception status, second notified information is one that feeds back differential information between the latest information (total) and the current information, and third notified information is one that feeds back differential information between the latest first notified information and the current information.

The following will specifically explain the reception status information notifying technique according to embodiments of the present invention with reference to the drawings.

### First embodiment

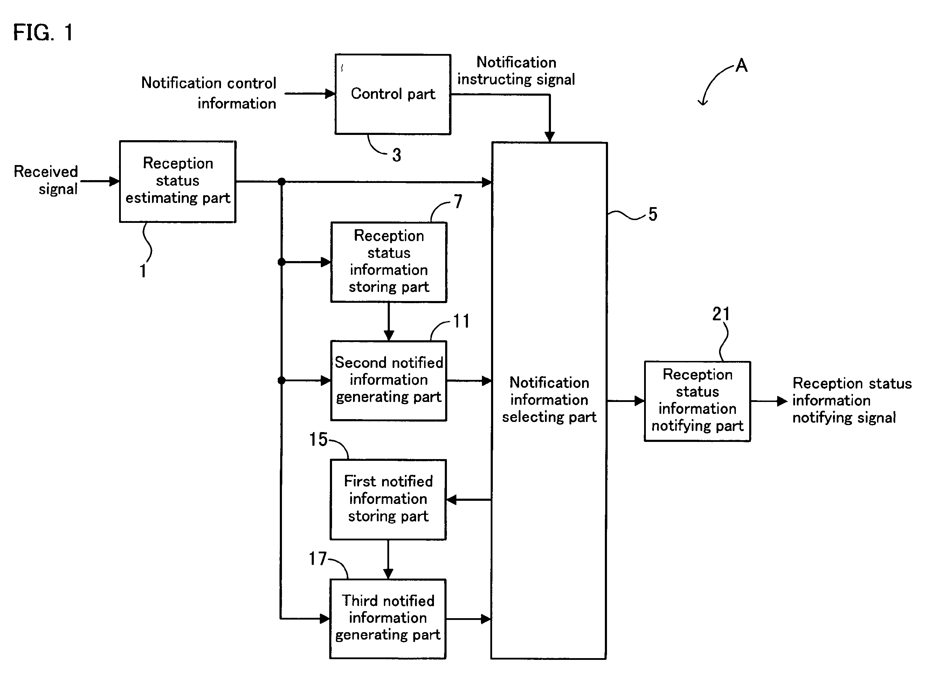

Fig. 1 is a functional block diagram showing one configuration example of a reception status information notifying apparatus according to a first embodiment of the present invention.
The functional block diagram of Fig. 1 shows the configuration of a reception status information notifying apparatus in a communication apparatus that estimates reception status from a received signal and notifies a communication partner of reception status information representing information obtained from the resultant reception status. In addition, as the configuration of the communication apparatus that notifies the communication partner of the reception status information, it is possible to use the configuration described in the aforementioned Patent Document 1 and Patent Document 2.

As illustrated in Fig. 1, in a reception status information notifying apparatus A according to this embodiment, a reception status estimating part 1 estimates a reception status from a received signal and outputs reception status information. A reception status information storing part 7 outputs stored previous reception status information to a second notified information generating part 11 and stores current reception status information from the reception status estimating part 1. The second notified information generating part 11 calculates a difference between the current reception status information from the reception status estimating part 1 and the previous reception status information stored in the reception status information storing part 7 to generate second notified information.

A first notified information storing part 15 outputs first notified information, which was stored latest, to a third notified information generating part 17, and stores first notified information instructed to be stored by a notified information selecting part 5 (a storage instruction is issued only when it is decided that the notification of the first notified information be performed). The third notified information generating part 17 calculates a difference between the current reception status information from the reception status estimating part and the first notified information (which was stored latest in the first notified information storing part 15) to generate third notified information.

A control part 3 generates a notification instructing signal that instructs the notified information selecting part to perform the notification of reception status information based on first notified information or third notified information in accordance with an input of notified control information, from e.g., a medium access control layer (MAC layer), representing a status when the notification of first reception status information is performed, one when an error occurs during reception of reception status information that can be judged by ACK/NACK and the like from a reception status information receiving apparatus side to a reception status information notifying apparatus side, and one when communication is restarted after communication is not performed for such a long time that no correlation is found.

The notified information selecting part 5 selects and outputs one of three types including the current reception status information (first notified information) from the reception status estimating part, second notified information generated by the second notified information generating part and third notified information generated by the third notified information generating part based on an amount of information (bit number) of each type and the notification instructing signal thereof.

Moreover, when selects the reception status information as notified information, the notified information selecting part 5 outputs the current reception status information to the first notified information storing part 15 and provides an instruction to store it as first notified information.

A reception status information notifying part 21 generates a reception status information notifying signal for notifying the communication partner of the notified information selected by the notified information selecting part 5. Generation of the reception status information notifying signal by the reception status information notifying part 21 is applied to the system.

For example, the following will explain an example of generation and transmission of the reception status information notifying signal by the reception status information notifying part 21 in an OFDM (Orthogonal Frequency Division Multiplexing) communication system, which is one of multi-carrier communication systems. First, the reception status information notifying part 21 performs error-correction coding of the notified information selected by the notified information selecting part 5, performs serial-parallel conversion of the error correction decoding result, and allocates a data bit to each subcarrier of OFDM to perform modulation. The reception status information notifying part 21 inversely Fourier transforms the modulation result to obtain an OFDM time signal and further adds a guard interval to the time signal. The reception status information notifying part 21 digital-analog converts and upconverts the OFDM time signal with the guard interval added to convert to a radio signal, and transmits it via an antenna. Additionally, it is preferable to add identification information, which identifies the type of notified information, to the top of the selected notified information. Moreover, it may be possible to multiplex the notified information on other data and transmit it.

In addition, the following parameters and their combinations can be used as "reception status information" representing information obtained from the reception status.

Examples of parameters
Received signal power
Received electric field intensity
Noise power
Interference power
Received signal vector error
Signal power to noise power ratio (SNR)
Signal power to interference power ratio (SIR)
Signal power to interference power and noise power ratio (SINR)
Carrier power to noise power ratio (CNR)
Carrier power to interference power ratio (CIR)
Carrier power to interference power and noise power ratio (CINR)
Desired signal power to undesired power ratio (DUR)
Delay profile
Doppler frequency
Modulation scheme
Channel coding rate
Error correction scheme
Spreading ratio
Number of code-multiplexing
Channel quality information
In addition, when the respective parameters are classified based on information that each parameter represents, the following classification can be obtained.

### 1) Information representing the size of received signals and unnecessary signals (information representing signal size)

Received signal power
Received electric intensity
Noise power
Interference power

### 2) Information representing ratio between signal necessary for demodulating received signal and signal (noise, interference wave) unnecessary therefor (information on S/N)

Signal power to noise power ratio (SNR)
Signal power to interference power ratio (SIR)
Signal power to interference power and noise power ratio (SINR)
Carrier power to noise power ratio (CNR)
Carrier power to interference power ratio (CIR)
Carrier power to interference power and noise power ratio (CINR)
Desired signal power to undesired power ratio (DUR)
It should be noted that the "signal" and the "carrier" have substantially the same meaning. The expression of "carrier to xx ratio" is one that is obtained by rephrasing the expression of "signal power to xx ratio", which has a broader meaning, based on "signal = carrier" in the digital signal transmission.

It should be noted that the last expression of "desired signal power to undesired signal power ratio" corresponds to an expression obtained by generalizing other six expressions.

### 3) Information representing distortion of transmission path and magnitude of its variation (transmission path information)

Received signal vector error
Delay profile
Doppler frequency
Among them, it can be said that the expression of "received signal vector error" represents distortion, which is caused by distortion of the transmission path, of amplitude and phase of the signal. Moreover, the "delay profile" is an index representing magnitude of variation of the transmission path in a frequency direction and the "Doppler frequency" is an index representing magnitude of variation of the transmission path in a time direction.

### 4) Parameters for generating transmission signal decided with reference to information of the aforementioned three groups (parameters for generating transmission signal)

Modulation scheme
Channel coding rate
Error correction scheme
Spreading ratio
Number of code-multiplexing
It should be noted that the definition of channel quality information (CQI) is changed depending on the system. For example, in HSDPA (High Speed Downlink Packet Access) in the standard of the third generation cellular phone by 3 GPP (3^{rd} Generation Partnership Project), there is used a format such that a modulation scheme and a transport block size (size of transmission data) are combined. It can be said that this case belongs to the fourth group.

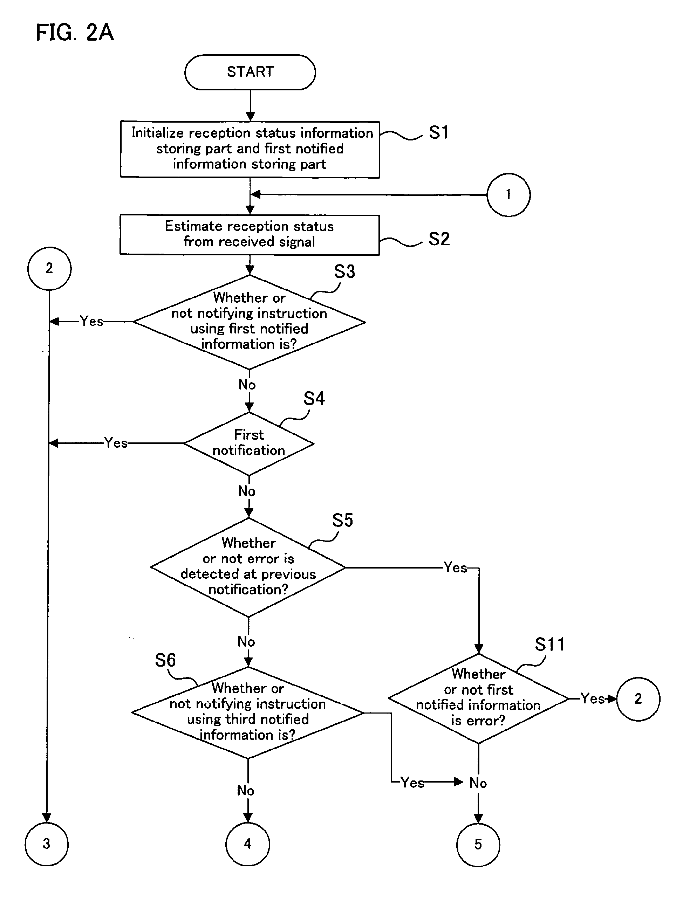

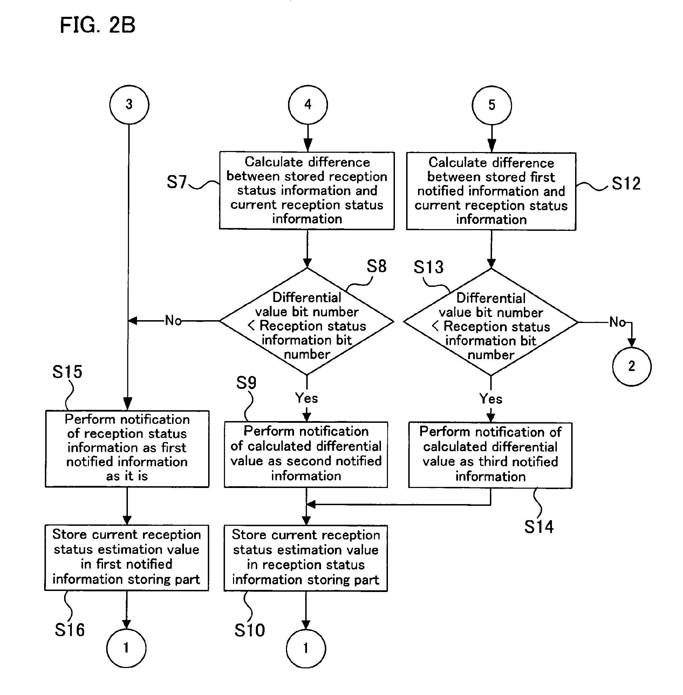

Figs. 2A and 2B are flowcharts showing the flow of an operation of the reception status information notifying apparatus according to the present embodiment. As shown in Figs. 2A and 2B, when processing is started, the reception status information notifying apparatus initializes the reception status storing part and the first notified information storing part in step S1. Next, in step S2, the reception status information notifying apparatus estimates a reception status from a received signal. In step S3, the reception status information notifying apparatus determines whether there is a notification instruction by first notified information. When there is the notification instruction (Yes), the operation goes to step S15. Where there is no notification instruction (No), the reception status information notifying apparatus determines whether first notification should be performed, and when the first notification should be performed (Yes), the operation goes to step S 15. When no first notification should be performed (No), the operation goes to step S5 to determine whether an error is detected in the previous notification. When the error is detected in the previous notification in step S5 (Yes), the operation goes to step S11. When no error is detected in the previous notification (No), the operation goes to step S6 to determine whether there is a notification instruction by third notified information. When there is the notification instruction (Yes), the operation goes to step S12. When there is no notification instruction (No), the operation goes to step S7 to calculate a difference between stored reception status information and current reception status information. Next, in step S8, the reception status information notifying apparatus determines whether a differential value bit number is below a reception status information bit number. When the differential value bit number is not below the reception status information bit number (No), the operation goes to step S15. When the differential value bit number is below the reception status information bit number (Yes), the operation goes to step S9 to perform the notification of the calculated differential value as second notified information. Next, in step S10, the reception status information notifying apparatus stores the current reception status information in the reception status information storing part. Sequentially, the operation goes back to step S2.

When the operation goes to step S11 from step S5, the reception status information notifying apparatus determines whether the first notified information is an error in step S11 and when it is the error (Yes), the operation goes to step S 15. When it is not the error (No), the operation goes to step S12 to calculates a difference between the stored first notified information and the current reception status information, and the operation goes to step S13. In step S13, the reception status information notifying apparatus determines whether the differential value bit number calculated in step S12 is smaller than the reception status information bit number. When it is not smaller than the reception status information bit number (No), the operation goes to step S15, and when it is smaller than the reception status information bit number (Yes), the operation goes to step S14. The notification of the differential value calculated in step S 14 is performed as third notified information and the operation goes to step S10. In step S 15, the reception status information notifying apparatus performs the notification of the reception status information as the first notified information directly, and in step S16, the reception status information notifying apparatus stores the current reception status information in the first notified information storing part and the operation goes back to step S2.

The aforementioned flow is described on the assumption of the system that performs the notification of the reception status information as the first notified information directly (a case in which the bit number of reception status information is equal to that of the first notified information).

The following will explain the selection criterion of the type of notified information in the example in Fig. 2.

1) When there is a selection instruction by a notification instruction signal, the operation is performed in accordance with the selection instruction.

2) When the bit number of a difference (second notified information) between the previous reception status information and the current reception status information is smaller than that of the reception status information (bit number of the first notified information) resulting from a calculation of the difference, the second notified information is selected. In other cases, first notified information is selected.

3) When an error occurs in notifications other than the first notified information, a difference (third notified information) between the stored first notified information and the current reception status information is calculated. And if the bit number of the difference is smaller than that of the first notified information, third notified information is selected, while first notified information is selected in other cases.

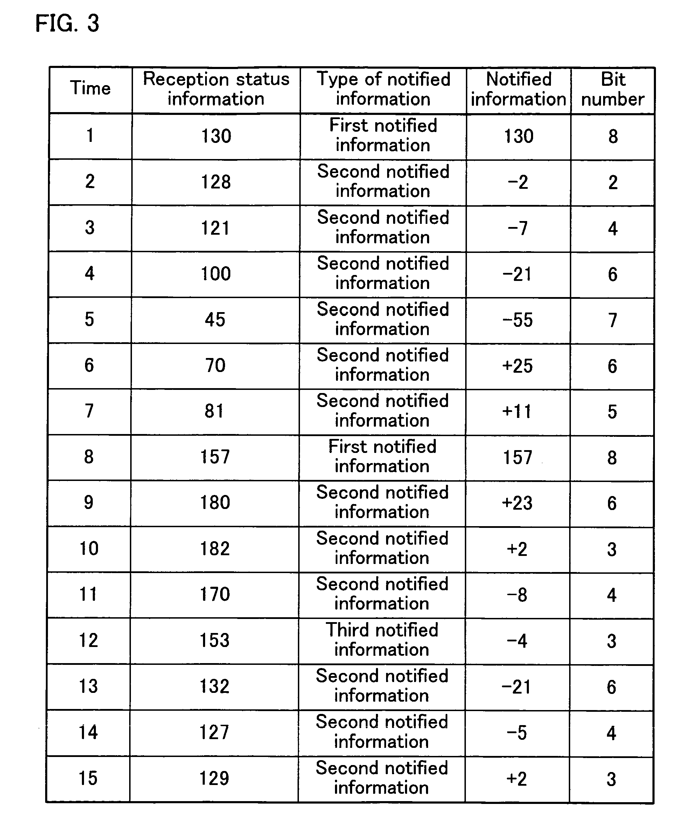

Fig. 3 is a view showing one example of the reception status information notification according to the first embodiment. Fig. 3 shows an example, at each time (in the order in which communication occurs), of reception status information, a type of selected notified information, a value of notified information at that time and a necessary bit number. Additionally, in the example in Fig. 3, it is assumed that a first reception status information notification is performed at time 1 and an error occurs during reception of reception status information notification at time 11. In the first reception status information notification at time 1, the notification of reception status information "130" is performed as the first notified information. At time 2 to 7, 9 to 11, and 13 to 15, a difference between reception status information at preceding time and reception status information at the current time has the bit number smaller than that of the first notified information, respectively. Accordingly, the difference is notified as the second notified information.

At time 8, a difference "+76" between reception status information "81" at the preceding time 7 and reception status information "157" at time 8 has the same bit number as that of the first notified information resulting in the notification of current reception status information "157" as the first notified information. At time 12, calculation is performed of a difference between the first notified information"157" at time 8, which is the latest first notified information, and reception status information "153" at time 12 since an error occurs during reception of the reception status information notification at the preceding time 11. The difference "-4" has the bit number smaller than that of the first notified information resulting in the notification of the difference "-4" as the third notified information. In addition, if the bit number of the difference is equal to or larger than that of the first notified information here, reception status information at time 12 is notified using the first notified information.

As explained above, according to this embodiment, only the notification of the difference between the previous reception status and the current reception status is performed, thereby making it possible to reduce an amount of information necessary for reception status information notification. For example, in the case of a system having eight-bit reception status information and 768 subcarriers, 6144 bits are required for one reception status information notification in the conventional case in which all notifications are performed using the first notification information. On the other hand, in the reception status information notifying apparatus according to the present embodiment, 6144 bits are required for the first notification as with the conventional case since the first notified information is used. However, when it is possible to perform the second and following notifications using four-bit second notified information, which is a half of the first notified information, without any reception error, the number of bits can be reduced to 3072. Moreover, when the reception status variation is small and the notification of the second notified information with two bits is possible, the number of bits can be reduced to 1536.

Even if one bit of information for identifying the type of notified information and three bits of information for performing the notification of the bit number in the case of the second notified information (in this example, the maximum bit number of the second notified information is seven) are added to the bit of the difference, there is a following advantage. Specifically, an overhead of data communication is reduced to improve the throughput of the system since it is possible to substantially reduce, as compared with the conventional case, the amount of information necessary for the reception status information notification. Also, it is possible to reduce an occupied band of a control channel when the reception status notification is performed using the control channel. Moreover, it is possible to reduce power consumption by a decrease in time necessary for transmitting and receiving the reception status information notifications.

### Second embodiment

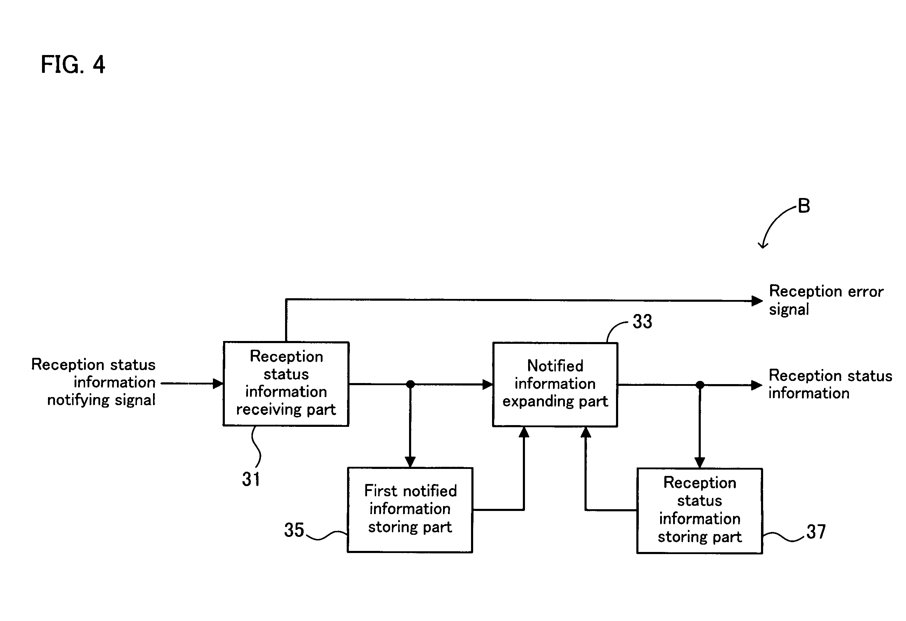

An explanation will be next given of a second embodiment of the present invention. Fig. 4 is a view showing one configuration example of a reception status information receiving apparatus B. Fig. 4 shows a configuration of a reception status information receiving apparatus in a communication apparatus which receives reception status information from a communication partner.

A reception status information receiving part 31 shown in Fig. 4 receives a reception status information notifying signal from the communication partner. When a reception error occurs, the reception status information receiving part 31 outputs the reception error signal and discards the reception status information notifying signal. When no reception error occurs, the reception status information receiving part 31 acquires notified information from the reception status information notifying signal and outputs the notified information.

A first notified information storing part 35 stores the notified information, which is a first notified information output from the reception status information receiving part.

A reception status information storing part 37 outputs the stored previous reception status information to a notified information expanding part 33 and stores the current reception status information from the notified information expanding part 33. When the notified information output from the reception status receiving part 31 is first notified information, the notified information expanding part 33 outputs the notified information output from the reception status receiving part 31 as reception status information. On the other hand, when the notified information output from the reception status receiving part 31 is second notified information, the notified information expanding part 33 adds the notified information output from the reception status receiving part 31 to the previous reception status information stored in the reception status information storing part 37 to output as reception status information. Moreover, when the notified information output from the reception status receiving part 31 is third notified information, the notified information expanding part 33 adds the notified information output from the reception status receiving part 31 to the latest first notified information stored in the first notified information storing part 35 to output as reception status information.

Reception of the reception status information notifying signal by the reception status information receiving part 31 depends on the system.

For example, the following will explain an example of reception of the reception status information notifying signal and acquisition of notified information by the reception status information receiving part 31 in an OFDM communication system. First, the reception status information receiving part 31 receives a radio signal of a reception status information notifying signal from a communication partner via an antenna and performs downconversion, analog-digital conversion, and the like to convert the radio signal to an OFDM time signal of a baseband signal. The reception status information receiving part 31 removes a guard interval from the OFDM time signal and performs Fourier transform to acquire a modulation signal of each subcarrier of OFDM. The reception status information receiving part 31 demodulates the acquired modulation signal of each subcarrier and performs parallel-serial conversion and error-correction decoding so as to acquire notified information. Additionally, in the case where identification information, which identifies the type of notified information, is added to the top of the notified information, the identification information is further separated therefrom. Moreover, in the case where the notified information is multiplexed on other data, the notified information is further separated therefrom.

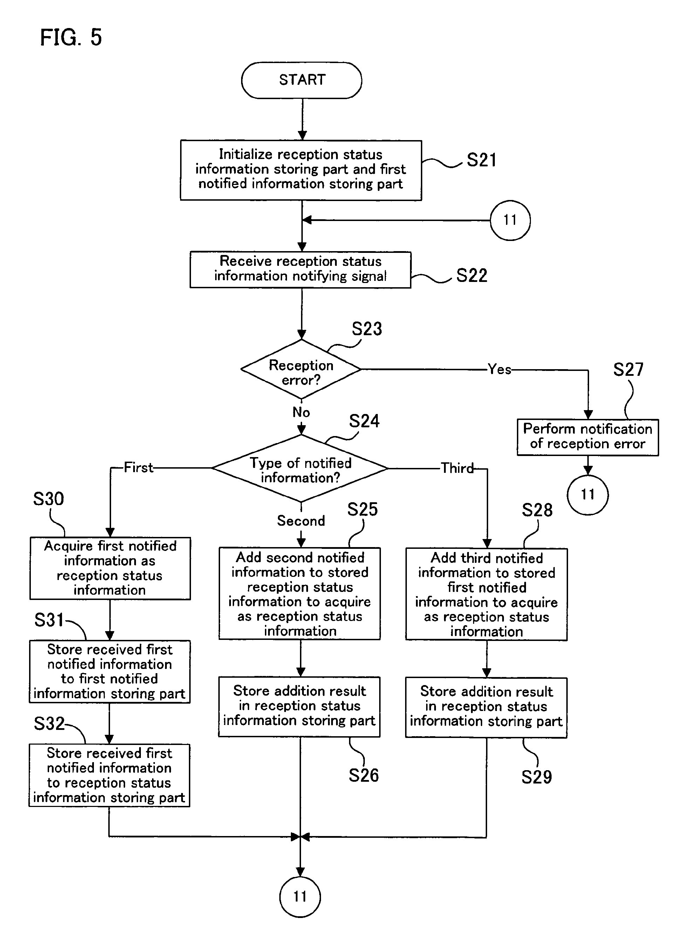

Fig. 5 is an operation flow chart of the reception status information receiving apparatus according to the present embodiment. As shown in Fig. 5, when processing is started, the reception status information storing part 37 and the first notified information storing part 35 are reset in step S21, at first. Next, in step S22, a reception status information notifying signal is received while the reception status information receiving apparatus determining whether a reception error occurs. When the reception error occurs (Yes), the operation goes to step S27 to perform the notification of the reception error, and the operation goes back to step S22. When the reception error does not occur (No), the type of notified information is determined in step S24. When the notified information is first notified information, the operation goes to step S30 to acquire the first notified information as reception status information. In addition, the received first notified information is stored in the first notified information storing part 35 in step S31 and then stored in the reception status information storing part 37 in step S32, and the operation goes back to step S22.

When the type of the notified information is second notified information in step S24, the operation goes to step S25 in which the second notified information is acquired as reception status information, by adding the second notified information to the previous reception status information stored in the reception status information storing part 37. Then, the addition result is stored in the reception status information storing part 37 in step S26, and the operation goes back to step S22.

When the type of the notified information is third notified information in step S24, the operation goes to step S28 in which the third notified information is acquired as reception status information, by adding the third notification information to the latest first notified information stored in the first notified information storing part 35. Then, the addition result is stored in the reception status information storing part 37 in step S29, and the operation goes back to step S22.

Fig. 6 is a view showing an example of a frame configuration of communication for the reception status information notification according to the present embodiment. A reception status information notification frame shown in Fig. 6 includes a notified information identification subframe 41 and a notified information subframe 43. The notified information identification subframe 41 transmits information for identifying the type of notified information and for identifying the bit number in the case of the second or third notified information. In addition, the notified information subframe 43 transmits any one of the first, second and third notified information.

Fig. 7 is a view showing the other configuration example of the frame configuration for the reception status information notification according to the present embodiment. The frame shown in Fig. 7 is the frame configuration example in which subframes 41 and 48 for the reception status information notification are time-multiplexed on a data subframe 51 for data communication. The frame shown in Fig. 7 includes a pilot subframe 45, a notified information identification subframe 41, a notified information subframe 48 and a data subframe 51. The pilot subframe 45 transmits a known signal for a reception status estimation and the like, the notified information identification subframe 41 transmits information for identifying the type of the notified information and for identifying the bit number of the second or third notified information, the notified information subframe 48 transmits the first, second or third notified information, and the data subframe 51 transmits communication data.

In addition to the effect of the first embodiment, the second embodiment has a following advantage. Specifically, even when an error occurs during reception of the reception status information notification, a necessary amount of information can be reduced by use of the third notified information, which represents the difference between the latest first notified information correctly received and the current notified information.

### INDUSTRIAL APPLICABILITY

The present invention is applicable for a communication apparatus.

## Claims

1. A communication method in which a receiving side notifies a transmitting side of reception status information, **characterized in that** the notification of reception status information is performed by combining first notified information representing current reception status information and second notified information representing a difference between the current reception status information and previous reception status information.

2. The communication method according to claim 1, **characterized in that** one of the first notified information and the second notified information is selected and the notification thereof is performed for each time, based on the amount of each of the first and second notified information.

3. The communication method according to claim 1 or 2, **characterized in that** when a reception status information is initially notified or a reception error occurs during reception of reception status information, the notification of the first notified information is performed.

4. A communication method in which a receiving side notifies a transmitting side of reception status information, **characterized in that** the notification of reception status information is performed by combining first notified information representing current reception status information, second notified information representing a difference between the current reception status information and previous reception status information, and third notified information representing a difference between the current reception status information and latest notified first notified information.

5. The communication method according to claim 4, **characterized in that** any one of the first notified information, the second notified information and the third notified information is selected and the notification thereof is performed for each time, on the basis of the amount of each of the first to third notified information.

6. The communication method according to claim 4 or 5, **characterized in that**
the notification of the first notified information is performed at a first reception status information notifying time, and
the notification of one of the first notified information and the third notified information is performed when a reception error occurs during reception of reception status information.

7. A reception status information notifying apparatus in a communication system in which a receiving side notifies a transmitting side of reception status information, the reception status information notifying apparatus comprising:
a reception status estimating part that estimates a reception status from a received signal to output current reception status information;
a reception status information storing part that stores the current reception status information;
a second notified information generating part that calculates a difference between the current reception status information and previous notified status information stored in the reception status information storing part to generate second notified information;
a control part that, upon receiving notified control information for controlling a type of notified information, generates and outputs a notification instructing signal for instructing a notified information selecting part to send, by use of first notified information, reception status information using;
a notified information selecting part that selects one of the first notified information representing the current reception status information and the second notified information to output, based on the amount of each of the first and second notified information, as well as the notification instructing signal; and
a reception status information notifying part that generates a reception status information notifying signal for notifying a communication partner of the selected notified information.

8. A reception status information notifying apparatus in a communication system in which a receiving side notifies a transmitting side of reception status information, the reception status information notifying apparatus comprising:
a reception status estimating part that estimates a reception status from a received signal to output current reception status information;
a reception status information storing part that stores the current reception status information;
a second notified information generating part that calculates a difference between the current reception status information and previous notified status information stored in the reception status information storing part to generate second notified information;
a first notified information storing part that outputs latest notified first notified information stored therein to a third notified information generating part and stores first notified information instructed to be stored by a notified information selecting part that selects notified information;
a third notified information generating part that calculates a difference between the current reception status information and the latest notified first notified information stored in the first notified information storing part to generate third notified information;
a control part that, upon receiving notified control information for controlling a type of notified information, generates and outputs a notification instructing signal for instructing the notified information selecting part to send, by use of first notified information or third notified information, reception status information;
a reception status information notifying part that generates a reception status information notifying signal for notifying a communication partner of the notified information selected by the notified information selecting part;
**characterized in that** the notified information selecting part selects and outputs one of the first notified information representing the current reception status information, the second notified information and the third notified information, based on the amount of each of the first to third notified information, as well as the notification instructing signal, and instructs the first notified information storing part to output and store the first notified signal when the first notified information is selected.

9. A reception status information receiving apparatus in a communication system in which a receiving side notifies a transmitting side of reception status information, the reception status information receiving apparatus comprising:
a reception status information receiving part that receives a reception status information notifying signal from a communication partner, outputs a reception error signal when a reception error occurs, and outputs the received notified information when reception is made without any error;
a notified information expanding part that outputs reception status information; and
a reception status information storing part that stores the reception status information, **characterized in that**
when the received notified information is first notified information representing reception status information, the notified information expanding part outputs the notified information as reception status information, and
when the received notified information is second notified information representing a difference between reception status information and previous reception status information, the notified information expanding part adds the previous reception status information stored in the reception status information storing part and the second notified information to output the resultant information of the addition as reception status information.

10. A reception status information receiving apparatus in a communication system in which a receiving side notifies a transmitting side of reception status information, the reception status information receiving apparatus comprising:
a reception status information receiving part that receives a reception status information notifying signal from a communication partner, outputs a reception error signal when a reception error occurs, and outputs the received notified information when reception is made without any errors;
a first notified information storing part that, when the received notified information is first notified information representing reception status information, stores the notified information; and
a reception status information storing part that stores reception status information received from a notified information expanding part that outputs reception status information, **characterized in that**
when the received notified information is first notified information representing reception status information, the notified information expanding part outputs the notified information as reception status information,
when the received notified information is second notified information representing a difference between reception status information and previous reception status information, the notified information expanding part adds the second notified information to the previous reception status information stored in the reception status information storing part to output the resultant information of the addition as reception status information, and
when the received notified information is third notified information representing a difference between the reception status information and the latest notified first notified information, the notified information expanding part adds the third notified information to the latest first notified information stored in the first notified information storing part to output the resultant information of the addition as reception status information.
